# EUROPÄISCHE PATENTSCHRIFT

(11) **EP 2 018 297 B1**
(45) Veröffentlichungstag und Bekanntmachung des Hinweises auf die Patenterteilung: **18.11.2009**
(21) Anmeldenummer: 07724901.9
(22) Anmeldetag: 05.05.2007
(51) Int. Cl.: B60Q 1/48, B60R 1/00, B60R 11/04

(54) **VORRICHTUNG ZUR BILDERFASSUNG DES AUSSENBEREICHS VON EINEM FAHRZEUG MITTELS EINER KAMERA**
DEVICE FOR CAPTURING AN IMAGE OF THE EXTERNAL AREA OF A VEHICLE BY MEANS OF A CAMERA
DISPOSITIF DE SAISIE D'IMAGES DE LA ZONE EXTÉRIEURE D'UN VÉHICULE AU MOYEN D'UNE CAMÉRA

(30) Priorität: 16.05.2006 DE 102006023103
(43) Veröffentlichungstag der Anmeldung: 28.01.2009
(73) Patentinhaber: Huf Hülsbeck & Fürst GmbH & Co. KG, 42551 Velbert (DE)
(72) Erfinder: BUSCHMANN, Gerd, 42553 Velbert (DE); DAMMERS, Bernd, 46149 Oberhausen (DE)
(74) Vertreter: Patentanwälte Buse, Mentzel, Ludewig
(86) Internationale Anmeldenummer: PCT/EP2007/003977
(87) Internationale Veröffentlichungsnummer: WO 2007/131651

(56) Entgegenhaltungen:
- EP-A2- 1 332 923
- DE-A1- 10 234 483
- JP-A- 2 144 239
- JP-A- 11 245 729
- JP-A- 56 099 835

## Beschreibung

Die Erfindung richtet sich auf eine Vorrichtung der im Oberbegriff des Anspruches 1 angegebenen Art. Wenn die Kamera nicht benutzt wird, ist sie mittels eines Motors und Getriebes in einer Einfahrlage geschützt hinter einer Fahrzeugwand angeordnet. Die Kamera wird von einem Schlitten getragen. Wenn die Kamera benutzt werden soll, wird der Schlitten durch eine Öffnung in der Fahrzeugwand in eine Ausfahrlage verschoben.

Eine solche Vorrichtung ist aus der EP 1 332 923 A2 bekannt. Entsprechend dem gewünschten Blickwinkel der Kamera in Ausfahrlage muss der Schlitten im Fahrzeug in einem Neigungswinkel angeordnet sein. Dadurch nimmt der Schlitten und die Kamera verhältnismäßig viel Platz im Fahrzeug ein. Das gilt auch für Vorrichtungen gemäß der WO 01/68403 A1, wo eine Kamera aus der Karosserie des Fahrzeugs parallel zur Fahrbahn ausfahrbar ist.

Die EP 1 529 688 A1 und die DE 10 2004 050 297 A1 zeigen Vorrichtungen anderer Art, die auf der Rückseite eines schwenkbaren Karosserieteils angeordnet sind, z.B. auf der Rückseite eines schwenkbar gelagerten Emblems. Die Kamera befindet sich hier auf der Rückseite des Karosserieteils. Im Gebrauchsfall wird dieser Karosserieteil aus einer Ruhestellung in eine Neigungsposition verschwenkt, wo eine Optik an der Kamera den Fahrbahn-Bereich neben dem Fahrzeug bildlich erfassen kann. Weil die Schwenklager im ruhenden Karosserierest angeordnet sein müssen, der den schwenkbaren Karosserieteil allseitig umschließt, sind auch die Vorrichtungen der letztgenannten Art platzaufwendig.

Bei der bekannten Vorrichtung der im Oberbegriff genannten Art ist es auch bekannt, im Bereich der Öffnung in der Fahrzeugwand einen Deckel vorzusehen, der vom Motor mitbeweglich ist. In der Einfahrlage ist die Öffnung in der Fahrzeugwand vom Deckel verschlossen, aber in der Ausfahrlage freigegeben.

Bei der genannten EP 1 332 923 A2 ist der Deckel auf der Außenseite der Fahrzeugwand eigenständig schwenkgelagert und über einen Lenker mit beidendigen Anlenkstellen mit einem Ansatz am Schlitten verbunden. Der Deckel wird beim Verschieben des Schlittens vom Lenker mitgenommen und gelangt in der Einschublage in eine die Öffnung verschließende Zuklappposition. In der Ausfahrlage sorgt der Lenker für eine Aufklappposition des Deckels.

Der Erfindung liegt die Aufgabe zugrunde, eine Vorrichtung der im Oberbegriff des Anspruches 1 genannten Art zu entwickeln, die zuverlässig den gewünschten Außenbereich vom Fahrzeug erfasst und dennoch raumsparend gestaltet ist. Dies wird durch die im Anspruch 1 angeführten Maßnahmen erreicht, denen folgende besondere Bedeutung zukommt.

Weil der Schlitten bei der Erfindung einen hülsenartigen Hohlraum aufweist, der sich in Verschiebungsrichtung des Schlittens erstreckt, soll der Schlitten nachfolgend kurz "Schubhülse" bezeichnet werden. Die Kamera ist auf einer Achse schwenkbar im Hohlraum der Schubhülse angeordnet. Vorzugsweise erstreckt sich die Achse quer zur Verschiebungsrichtung der Schubhülse. Beim Verschieben der Schubhülse wird die Kamera zwischen zwei Stellungen verschwenkt. Es gibt eine Ruhestellung, wo die Kamera im Wesentlichen im Hülsen-Hohlraum angeordnet ist und die Schubhülse sich dabei in ihrer Einfahrlage befindet. Dann gibt es aber noch eine herausgeschwenkte Arbeitsstellung der Kamera, wo die Kamera durch einen Ausbruch in der Hülsenwand sperrig herausragt. Dann nimmt die Schubhülse ihre Ausfahrlage ein. Dies gewährleistet einen raumsparenden Einbau der erfindungsgemäßen Vorrichtung im Fahrzeug. Die Einbaufläche ist praktisch auf den Querschnitt der Kamera begrenzt. Welche Lage die Kamera im Gebrauchsfall einzunehmen hat, kann dabei völlig unberücksichtigt bleiben.

Für die Bewegung der Kamera wird ein Motor verwendet, dessen Drehrichtung in einem ersten Fall umgekehrt werden kann, wenn er von der Ausfahrbewegung der Schubhülse in Einfahrbewegung übergeht. Eine alternative Möglichkeit dazu besteht darin einen Schrittmotor zu verwenden, der die Einfahrlage der Schubhülse und/oder deren Ausfahrlage bestimmt. In diesem Fall bedarf es keiner Endanschläge.

Es ist möglich, einen vom Motor mitbeweglichen Deckel zu verwenden, der Bestandteil der Schubhülse ist und bei deren Verschiebung gleich mitbewegt wird. Ein solcher Deckel kann Träger eines Emblems, eines Zierrats oder eines Funktionsteiles sein, wie z. B. einer Leuchte.

Ausweislich des Anspruches 11 kann die Kurbelstange aus zwei Abschnitten bestehen, die miteinander kuppelbar sind. Die dafür verwendete Kupplung sollte gleich so ausgebildet sein, dass sie eine Montage und/oder eine Längenjustierung der Kurbelstange zulässt. Die Kurbel, an welcher diese Kurbelstange angebracht ist, führt bei der Bewegung des Getriebes zwischen der Einfahr- und Ausfahrlage eine Drehung aus, die vorteilhafterweise kleiner/gleich 180° ist.

Ausweislich des Anspruches 14 soll die Schubhülse in einer ruhenden Führungshülse längsverschieblich aufgenommen sein. Diese Führungshülse kann an ihrem äußeren Stirnende einen Flansch tragen, der in der Einbauvorlage der Vorrichtung sich an der Fahrzeugwand abstützt. Dieser Flansch besitzt vorteilhaft eine nach außen weisende Ringzone, die als Anlagefläche für den linearen hubbeweglichen Deckel oder für den Hülsenboden dient. Wenn sich die Ringzone in Anlage am Deckel befindet, dann liegt die Einfahrlage der Schubhülse vor. Die Stirnöffnung der Führungshülse ist dann verschlossen. Die Führungshülse hat zwar eine umlaufende Mantelfläche, aber ein vom Motor zur Bewegung der Schubhülse und/oder Kamera dienendes Getriebe tritt durch eine Öffnung am inneren Stirnende der Führungshülse ins Hülseninnere ein und läuft bis zur Schubhülse weiter.

Wie Anspruch 15 hervorhebt, ist die Führungshülse wenigstens abschnittweise von einer Gehäusebuchse umschlossen und durch diese geschützt. Die in Anspruch 9 erwähnte Federkraft für die Antriebseinheit kann bei dieser Gehäusebuchse von einer Druckfeder erzeugt sein. Das eine Ende der Druckfeder stützt sich an einer Abstützstelle vom Buchsenboden der Gehäusebuchse ab, während das andere Federende an einem Axialabsatz der Schubhülse anliegt.

Es empfiehlt sich ferner, die Längsmittenachse der Führungshülse und die Verschiebungsrichtung der Schubhülse parallel zur Fahrbahn verlaufen zu lassen, auf welcher sich das Fahrzeug bewegt. Alternativ würde auch eine gewisse Neigung nützlich sein. Die Schubhülse hat mindestens in jenem Bereich, welcher der Fahrbahn zugekehrt ist, einen Ausbruch in ihrer Mantelfläche. Aus diesem Ausbruch kann die Kamera wenigstens teilweise herausschwenken, wenn Sie sich in ihrer Arbeitsstellung befindet.

Zur Befestigung der Führungshülse empfiehlt es sich, an der Gehäusebuchse einen Gegenflansch vorzusehen, der sich auf der Rückseite der Fahrzeugwand abstützt. Dieser Gegenflansch wirkt mit dem Flansch der Führungshülse zusammen. Die Fahrzeugwand wird sandwichartig zwischen dem Flansch und dem Gegenflansch eingeklemmt. Die Gehäusebuchse kann zugleich als Träger für eine Umhüllung des Motors und/oder des zugehörigen Getriebes dienen.

Ausweislich des Anspruches 7 sitzt die Kamera in einer Halterung, welche die erwähnte Schwenkachse aufweist. Es empfiehlt sich an dieser Halterung für die Kamera einen oder mehrere Endanschläge vorzusehen, die in eingeschwenkter Ruhestellung der Kamera an Schultern im Inneren der Schubhülse und/oder der Führungshülse zur Anlage kommen. Für solche Endanschläge könnte man Stege im Umfangsbereich der Halterung verwenden, die dann als Schultern fungieren. Für diese Schultern kann man die Innenflächen der Hülsenwand der Schubhülse und/oder der Führungshülse nutzen.

Es ist von Vorteil, wenn in der Einfahrlage die Kamera selbst und möglicherweise sogar ihre Schwenkachse sich hinter der Fahrzeugwand befindet, aber in der Ausfahrlage im Wesentlichen vor der Fahrzeugwand zu positioniert sind. Wenn sich die Kamera in Ihrer eingeschwenkten Ruhestellung befindet, sollte die optische Achse der Kamera parallel oder in einem kleinen Winkel bezüglich der Achse der Längsverschiebungsrichtung der Schubhülse angeordnet sein. In der herausgeschwenkten Arbeitsstellung dagegen empfiehlt es sich einen großen Winkel zwischen der optischen Achse der Kamera und der Achse der Längsverschiebungsrichtung vorzusehen.

Von großem Vorteil ist es, die Schubhülse, die Führungshülse und die Gehäusebuchse ineinander zu schachteln. Dann nehmen Sie eine miteinander ausgerichtete lineare Anordnung im Fahrzeug ein. Diese Anordnung bestimmt dann die Längsverschiebungsrichtung der Schubhülse. Auch der Motor und/oder das Getriebe sollten wenigstens bereichsweise mit der linearen Anordnung der Schubhülse, der Führungshülse und der Gehäusebuchse ausgerichtet sein.

Sehr nützlich ist es, eine Leuchte mit der Kamera zu verbinden. Dann erhält man eine Baueinheit aus Leuchte und Kamera. In dieser Baueinheit wird die Leuchte konform mit der Kamera mitbewegt und nimmt dann teil sowohl an einer translatorischen Bewegung zwischen der Einfahrlage und der Ausfahrlage der Kamera als auch an einer rotatorischen Bewegung wischen der Ruhestellung und der Arbeitsstellung der Kamera. ,

Der Start der Ausfahrbewegung und/oder der Einfahrbewegung der Kamera kann mit bestimmten Funktionen im Fahrzeug verbunden sein. So kann z. B. die Betätigung eines Rückwärtsganges im Fahrzeug die Ausfahrbewegung der Kamera starten. Schließlich könnte die Einfahrbewegung dann starten, wenn das Fahrzeug sich mit einer definierten Geschwindigkeit vorwärts bewegt und/oder wenn eine bestimmte Zeit nach dem Unwirksamsetzen des Rückwärtsganges des Fahrzeugs verstrichen ist.

Weitere Maßnahmen und Vorteile der Erfindung ergeben sich aus den Unteransprüchen und den Zeichnungen. In den Zeichnungen ist die Erfindung in einem Ausführungsbeispiel dargestellt. Es zeigen:
- Fig. 1: einen Längsschnitt durch die wesentlichsten Teile der erfindungsgemäßen Vorrichtung, wenn sich der Schlitten in einer Einfahrlage und die Kamera in einer Ruhestellung befinden,
- Fig. 2: in einem zu Fig. 1 entsprechenden Längsschnitt die Ausfahrlage der erfindungsgemäßen Schubhülse, wo sich die Kamera in einer seitlich sperrig herausragenden Arbeitsstellung außerhalb der Schubhülse befindet,
- Fig. 3: einer perspektivischen Rückansicht der Vorrichtung und
- Fig. 4: eine perspektivische Vorderansicht der gleichen Vorrichtung.

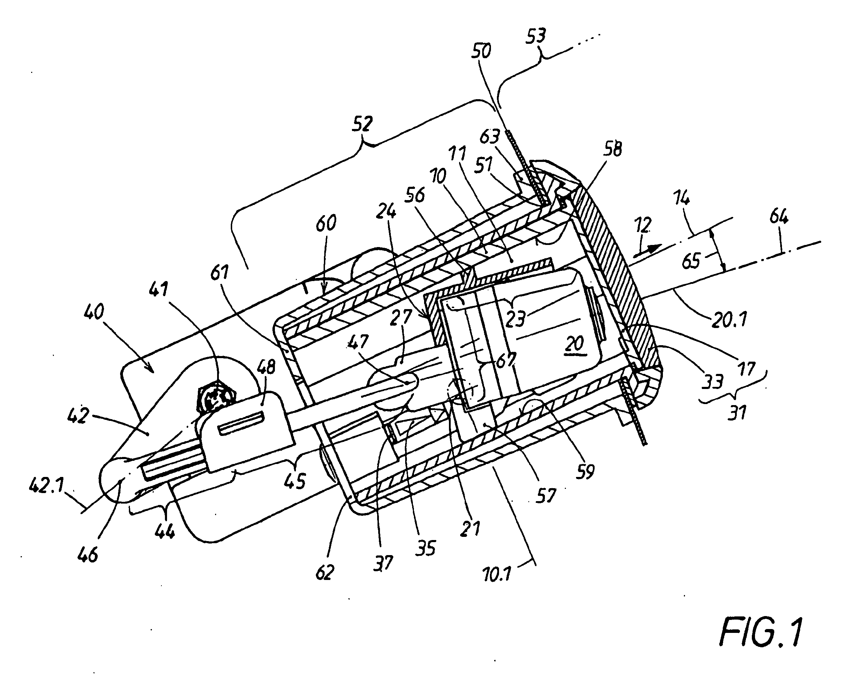

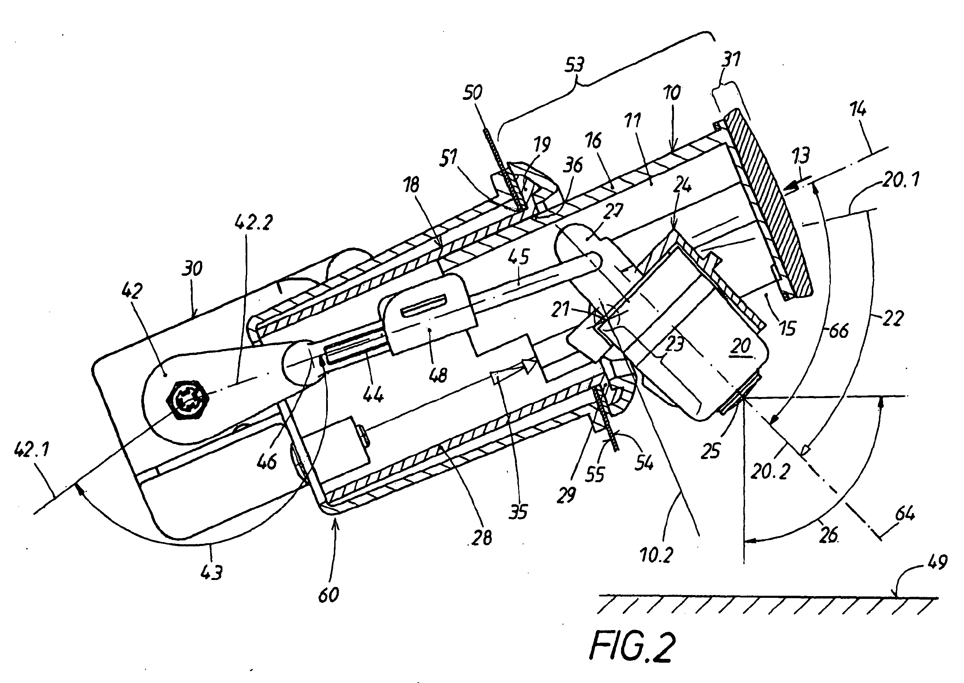

Bei der Erfindung ist der Schlitten mit einem hülsenartigen Hohlraum 11 versehen, der sich in Richtung der durch die Pfeile 12 und 13 in Fig. 1 und 2 veranschaulichten Verschiebung des Schlittens erstreckt. Deshalb kann der Schlitten als "Schubhülse" bezeichnet werden, die in den Zeichnungen mit dem Bezugszeichen 10 gekennzeichnet ist. Im Hohlraum 11 der Schubhülse 10 ist eine Kamera 20 auf einer Achse 21 schwenkbar gelagert, die sich im vorliegenden Ausführungsbeispiel quer zur Verschiebungsrichtung 12, 13 erstreckt. Die Schwenkachse könnte aber auch anders bezüglich der Verschiebungsrichtung 12, 13 orientiert sein. Es gibt im vorliegenden Fall einen einheitlichen Motor 30, der zunächst die Verschiebung 12, 13 zwischen zwei aus Fig. 1 und 2 ersichtlichen Lagen besorgt, nämlich einer Einfahrlage 10.1 in Fig. 1 und einer Ausfahrlage 10.2 in Fig. 2. Der gleiche Motor 30 dient aber auch für eine Schwenkbewegung 22 der Kamera 20 zwischen zwei Stellungen 20.1, 20.2. Es gibt eine besonders schlanke Bauweise in der aus Fig. 1 ersichtlichen Ruhestellung 20.1, wo die Kamera 20 im Wesentlichen längsorientiert im Hülsen-Hohlraum 11 angeordnet ist. In ihrer eingeschwenkten Ruhestellung 20.1 ist die Kamera 20 mit ihrer strichpunktiert verdeutlichten optischen Achse 64 entweder parallel zur in Fig. 1 verdeutlichten Längsmittenachse 14 oder in einem kleinen Winkel 65 positioniert. Die Einbaufläche ist praktisch auf dem Querschnitt der Kamera 20 begrenzt. Welche Lage die Kamera im Gebrauchsfall einzunehmen hat, kann dabei völlig unberücksichtigt bleiben.

Die Fig. 2 zeigt die andere Stellung 20.2 der Kamera 20, wo sie im Sinne des Pfeils 22 von Fig. 2 verschwenkt worden ist und durch einen seitlichen Ausbruch 15 in der Hülsenwand der Schubhülse 10 herausragt. Dann befindet sich, wie gesagt, die Schubhülse 10 in ihrer Ausfahrlage 10.2. Obwohl die Kamera 20 in der vorgeschilderten Ruhestellung 20.1 in eine "falsche Richtung 64" weist, erfasst sie jetzt, in der Arbeitsstellung 20.2 von Fig. 2 den gewünschten Außenbereich des Fahrzeugs. Es kann in der Arbeitsstellung 20.2 jede gewünschte Winkellage 20.2 und Größe des Bilderfassungswinkels 26 erreicht werden, mit der der jeweils interessierende Außenbereich vom Fahrzeug bildmäßig erfasst wird. In der Arbeitsstellung 20.2 nimmt die Kamera 20 einen großen Winkel 66 gegenüber der Längsmittenachse 14 der Schubhülse 10 ein. Die Kamera 20 befindet sich dann in einer wenigstens teilweise aus der Schubhülse 10 herausragenden Position. Das ist deswegen möglich, weil der die Kamera 20 tragende Teil der Schubhülse 10 sich außerhalb der Fahrzeugwand 50 in ihrer Ausfahrlage 10.2 befindet.

Gemäß Fig. 2 hat der optische Eingang 25 der Kamera einen großen Bilderfassungs-Winkel 26, von z.B. 160°. Die vertikale Begrenzung dieses Bilderfassungs-Winkels 26 kann, gegenüber der Vertikalen ein Winkel von mehr als 90° sein, z.B. 96°. Diese günstigen optischen Verhältnisse sind bei der Erfindung durch die translatorischen Bewegungen 12, 13 und der rotatorischen Bewegungen 22 der Kamera 20 möglich.

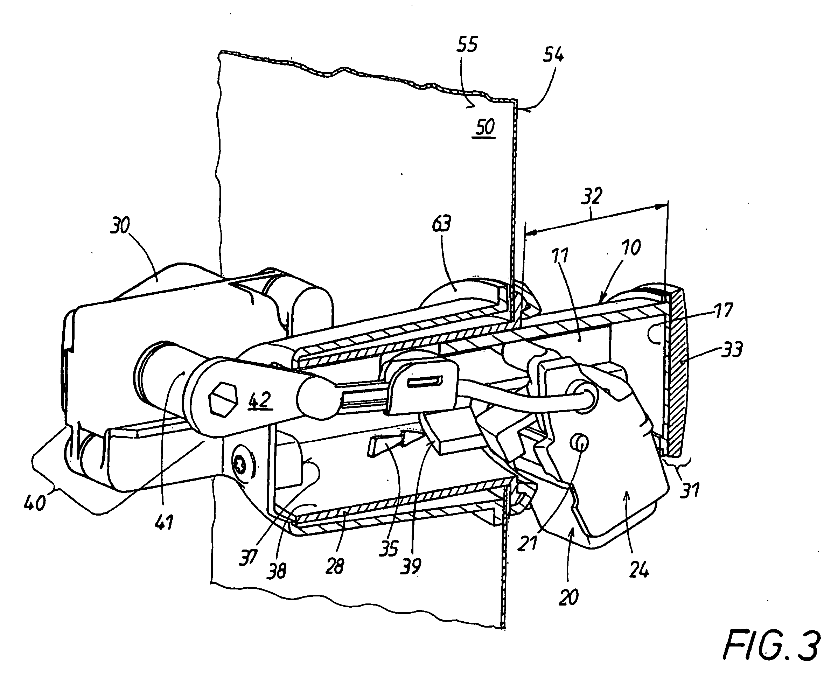

Ferner schlägt die Erfindung einen Deckel 31 vor, der fester Bestandteil der Schubhülse 10 ist. Der Deckel 31 ist am äußeren Stirnende der Schubhülse 10 befestigt und führt bei deren Verschiebung 12, 13 eine lineare Hubbewegung 32 gemäß Fig. 3 aus. In der Einfahrlage 10.1 ist auch der Deckel 31 eingefahren und verschließt abdichtend eine Öffnung 51 in einer Fahrzeugwand 50. Der Deckel 31 befindet sich am äußeren Boden 17 der Schubhülse 10, welche den Hülsen-Hohlraum 11 nach außen begrenzt. Der Deckel 31 kann Träger eines Emblems 33, eines Zierrads oder eines beliebigen anderen Funktionsteils sein, z.B. einer Leuchte. Der Deckel 31 benötigt bei der Erfindung kein eigenes Getriebe. Weil der Deckel 31 fester Bestandteil der Schubhülse 10 ist, übernimmt eine Schlittenführung 18 der Schubhülse 10 auch die Bewegung des Deckels 31 bei seinem linearen Hub 32.

Der verwendete Motor 30 ist zweckmäßigerweise ein Schrittmotor, der an sich keine Endanschläge zur Bestimmung der Einfahr- und Ausfahrlage 10.1, 10.2 erfordert. Dadurch ist bei der Längsverschiebung 12, 13 ein geräuscharmer Lauf der Schubhülse 10 ebenso gewährleistet, wie eine leise Verschwenkung 22 der Kamera 20. Für die translatorische 12, 13 Bewegung und für das rotatorische 22 Verschwenken werden im Übrigen die gleichen Betriebsmittel verwendet, nämlich z.B. ein Kurbelgetriebe 40. Das vorliegende Kurbelgetriebe 40 besteht aus einem Kurbelarm 42 und einer zweiteiligen Kurbelstange 44, 45.

Das Kurbelgetriebe 40 ist selbsthemmend, wodurch die Kamera 20 nicht nur in ihrer Arbeitsstellung 20.2 und Ruhestellung 20.1, sondern auch in jeder Zwischenstellung gesichert ist. Der Schrittmotor 30 kann seine Drehrichtung umkehren, wenn die Ausfahrbewegung 12 der Schubhülse 10 in ihre Einfahrbewegung 13 übergeht. Bestandteil des Getriebes 40 ist schließlich noch eine nicht näher gezeigte Feder, die eine durch einen Kraftpfeil 35 veranschaulichte Federkraft auf einen Axialabsatz 39 einer Halterung 24 für die Kamera 20 ausübt. Das andere Ende der Druckfeder sitzt an einer Abstützstelle 37 eines Buchsenbodens 61, der Bestandteil einer Gehäusebuchse 60 ist. Die Gehäusebuchse 60 umschließt die Führungshülse 18. Der Buchsenboden 61 besitzt ein Loch 62, durch welches das Getriebe 40 in die darin befindliche Führungshülse 18 und dort bis zur Schubhülse 10 reicht.

Das Getriebe 20 umfasst außer der bereits erwähnten Kurbel 42, die der Motor 30 antreibt, eine Kurbelstange, die aus zwei Abschnitten 44, 45 besteht. Der zweite Kurbelstangen-Abschnitt 45 ist an einem Arm 27 der Kamera-Halterung 24 bei 27 angelenkt. Die beiden Stangen-Abschnitte 44, 45 sind durch eine Kupplung 48 miteinander verbunden, die zur Montage oder zur Längenjustierung der Kurbelstange 44, 45 dient. Die Kurbel 42 und der erste Kurbelstangen-Arm 44 der Kurbelstange bilden ein erstes Kniegelenk-Schenkelpaar, welches in der Ausfahrlage 10.2 der Kamera im Wesentlichen gestreckt und in der Einfahrlage 10.1 im Wesentlichen geknickt ist. Es gibt aber noch ein zweites Kniegelenk-Schenkelpaar, welches von dem zweiten Stangen-Abschnitt 45 und dem vorerwähnten Arm 27 der Kamerahalterung 24 gebildet ist. Wie ein Vergleich zwischen Fig. 1 und 2 zeigt, ist die Position dieses zweiten Kniegelenk-Schenkelpaares 27, 45 in umgekehrter Weise zu dem vorerwähnten ersten Kniegelenk-Schenkelpaar 42, 44 wirksam, nämlich in der Ausfahrlage 10.2 von Fig. 2 ist es geknickt und in der Einfahrlage 10.1 von Fig. 1 im Wesentlichen gestreckt. Die Kurbel 42 führt bei ihrer Drehung zwischen der Einfahr- und Ausfahrlage 10.1, 10.2 eine Drehung 43 aus, die kleiner/gleich 180° ausgebildet ist.

Die äußere Stirnöffnung 36 der erwähnten, ortsfest im Fahrzeug angeordneten Führungshülse 16 umfasst die erwähnte Öffnung 51 in der Fahrzeugwand 50. Beim Übergang von der Einfahrlage 10.1 in die Ausfahrlage 10.2 ist die Schubhülse 10 aus dieser Stirnöffnung 36 der Führungshülse 18 teleskopierbar. Die Führungshülse 18 hat an ihrer äußeren Stirnfläche einen Flansch 19, der in der Einbaulage der Vorrichtung sich an der Fahrzeugwand 50 abstützt, und zwar vorzugsweise an ihrer Außenseite 54 gemäß Fig. 3. Der Führungshülsen-Flansch 19 besitzt eine nach außen weisende Ringzone, die bei der Hubbewegung als Anlagefläche für einen Endabsatz an der Führungshülse 10 dient. Die Führungshülse 18 hat eine umlaufende Mantelfläche 28, die ihrerseits von der sie umschließenden Gehäusebuchse 60 umschlossen wird. Das trifft für die Schubhülse 10 nicht zu.

Die Schubhülse 10 hat mindestens im Bereich derjenigen Zone, die der Fahrbahn 49 des Fahrzeugs zugekehrt ist, einen Ausbruch 15 in ihrer Mantelfläche 16. In der Arbeitsstellung 20.2 kann die Kamera 20 aus diesem Ausbruch 15 teilweise herausschwenken.

Die Gehäusebuchse 60 kann eine vormontierte Baueinheit mit dem daran angeschlossenen Getriebe 40 und Motor 30 erzeugen, die als Ganzes beim Einbau in die Fahrzeugwand 50 gehandhabt wird. Zu ihrer Montage besitzt die Gehäusebuchse 60 einen Gegenflansch 63, der sich im Einbaufall um die Öffnung 51 herum auf der in Fig. 3 erkennbaren Rückfläche 55 der Fahrzeugwand 50 abstützt. Die Fahrzeugwand 50 ist dann sandwichartig zwischen dem Flansch 19 der Führungshülse 18 und dem Gegenflansch 63 der Gehäusebuchse 60 eingeklemmt.

Der Motor und das Getriebe 40 können auch von einer nicht näher gezeigten Umhüllung versehen sein, die an der Gehäusebuchse 60 befestigt ist.

Die Kamera-Halterung 24 kann einen oder mehrere Endanschläge 56, 57 besitzen, die in der eingeschwenkten Ruhestellung 20.1 die Kamera 20 an Schultern 58, 59 im Inneren der Schubhülse 10 abstützt. Solche Endanschläge 56, 57 sind im vorliegenden Fall aus Stegen im Umfangsbereich der Kamera-Halterung 24 gebildet. Die Schultern 58, 59 bestehen aus Innenflächen der Hülsenwand 16 der Schubhülse 10.

In der Einfahrlage 10.1 von Fig. 1 ist die Kamera 20 und ihre Schwenkachse 21 hinter der Fahrzeugwand 50 im inneren Raumbereich 52 angeordnet. Dagegen in der Ausfahrlage 10.2 von Fig. 2 befinden sie sich im Wesentlichen im äußeren Raumbereich 53 vor der Fahrzeugwand 50. Die Schubhülse 10, die Führungshülse 18 und schließlich die Gehäusebuchse 60 sind ineinandergeschachtelt und nehmen eine lineare Anordnung im Fahrzeug ein. Diese lineare Anordnung bestimmt die Verschiebungsrichtung 12, 13 der Schubhülse 10. Das vorbeschriebene Getriebe 40 ist wenigstens bereichsweise in Ausrichtung mit der linearen Anordnung der Schubhülse 10, der Führungshülse 18 und der Gehäusebuchse 60 positioniert.

Um die Kamera auch bei Dunkelheit wirksam zu setzen, könnte eine nicht näher gezeigte Leuchte zugeordnet sein. Eine solche Leuchte könnte mit der Kamera 20 bewegungsmäßig gekoppelt oder sogar verbunden sein, um eine konforme Bewegung mit ihr auszuführen. Es empfiehlt sich dabei, sowohl die translatorischen Bewegungen 12, 13 zwischen der Einfahrlage 10.1 und der Ausfahrlage 10.2 als auch die rotatorischen Bewegungen 22 zwischen der Ruhestellung 20.1 und der Arbeitsstellung 20.2 bei der Kamera 20 und der Leuchte gleichzeitig auszuführen.

Der Start der Ausfahrbewegung 12 und/oder der Einfahrbewegung 13 können mit bestimmten Funktionen im Fahrzeug verbunden sein. So könnte z.B. die Ausfahrbewegung 12 dann starten, wenn ein Rückwärtsgang im Fahrzeug wirksam gesetzt wird. Ein Start der Einfahrbewegung 13 könnte beginnen, sobald das Fahrzeug sich mit einer definierten Geschwindigkeit vorwärts bewegt. Als Alternative könnte auch eine bestimmte Zeit die Einfahrbewegung 13 starten, nachdem der Rückwärtsgang beim Fahrzeug beendet wurde.

### Bezugszeichenliste:

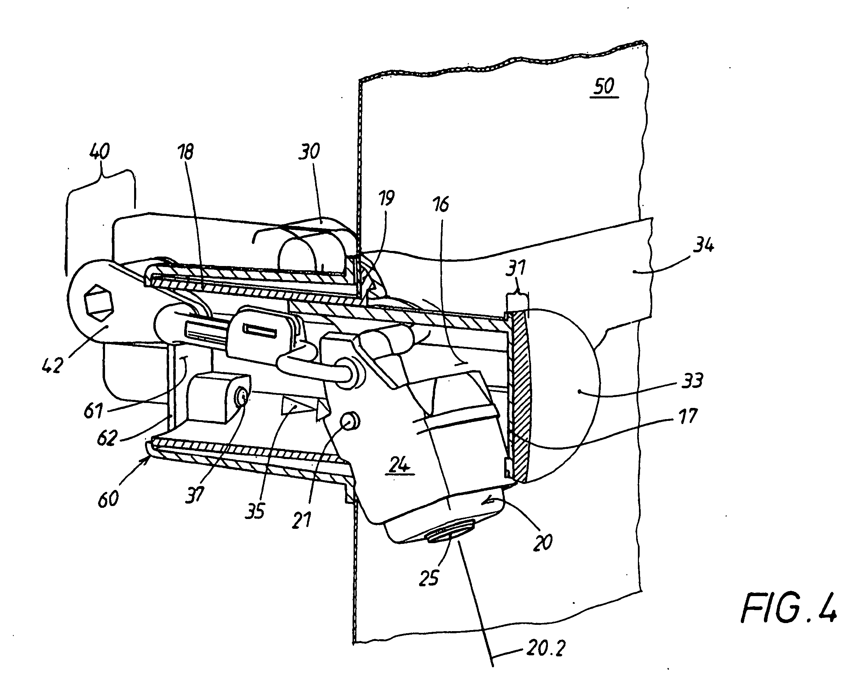

- 10: Schlitten, Schubhülse
- 10.1: Hilfslinie der Einfahrlage von 10 (Fig. 1)
- 10.2: Hilfslinie der Ausfahrlage von 10 (Fig. 2)
- 11: hülsenartiger Hohlraum, Hülsen-Hohlraum
- 12: Ausfahrbewegung von 10, Verschiebungspfeil nach außen (Fig. 1)
- 13: Einfahrbewegung von 10, Verschiebungspfeil nach innen (Fig. 2)
- 14: Längsmittenachse von 10 bzw. 18 (Fig. 2)
- 15: seitlicher Ausbruch in 10 (Fig. 2)
- 16: Hülseninnenwand von 10, Mantelfläche (Fig. 2)
- 17: äußerer Boden von 10 (Fig. 1)
- 18: Führungshülse für 10 (Fig. 2)
- 19: Flansch an 18 (Fig. 2)
- 20: Kamera
- 20.1: Hilfslinie der Ruhestellung von 20 (Fig. 1)
- 20.2: Hilfslinie der Arbeitsstellung von 20 (Fig. 2)
- 21: Achse
- 22: Pfeil der Schwenkbewegung von 20 (Fig. 2)
- 23: Längsdimension von 20 (Fig. 1, 2)
- 24: Halterung für 20
- 25: optischer Eingang in 20 (Fig. 2, 4)
- 26: Bilderfassungs-Winkel von 20 (Fig. 2)
- 27: Arm an 24
- 28: Mantelfläche von 18
- 29: Ringzone an 19, Anlagefläche für 31 (Fig. 2)
- 30: Motor, Motorhülle (Fig. 3)
- 31: Deckel für 51
- 32: Hubbewegung von 31 (Fig. 3)
- 33: Emblem (Fig. 4)
- 34: Zierrat (Fig. 4)
- 35: Pfeil der Federkraft, Druckfederkraft
- 36: Stirnöffnung von 18 (Fig. 2)
- 37: Abstützstelle der Druckfeder an 61 (Fig. 1)
- 38: offenes, inneres Stirnende von 18 (Fig. 3)
- 39: Axialabsatz an 10 für Druckfeder (Fig. 3)
- 40: Getriebe (Fig. 3)
- 41: Getriebe-Ausgangswelle (Fig. 1)
- 42: Kurbel
- 42.1: Hilfslinie für Ausgangsposition von 42 (Fig. 1)
- 42.2: Endposition von 42 (Fig. 2)
- 43: Drehbewegungsweg von 42 zwischen 42.1 und 42.2 (Fig. 2)
- 44: erster Abschnitt der Kurbelstange
- 45: zweiter Abschnitt der Kurbelstange
- 46: Anlenkstelle zwischen 42, 44, Kurbelende (Fig. 1, 2)
- 47: zweite Anlenkstelle zwischen 45, 27 (Fig. 1)
- 48: Kupplung zwischen 44, 45, Clip
- 49: Verlauf der Fahrbahn des Fahrzeugs bezüglich 14 (Fig. 2)
- 50: Fahrzeugwand
- 51: Öffnung in 50
- 52: hinterer Raumbereich von 50 (Fig. 1)
- 53: vorderer Raumbereich von 50 (Fig. 1)
- 54: Außenseite von 50 (Fig. 2)
- 55: Innenseite von 50 (Fig. 2)
- 56: erster Endanschlag an 24 (Fig. 1)
- 57: zweiter Endanschlag an 24 (Fig. 1)
- 58: Schulter für 56 (Fig. 1)
- 59: Schulter für 57 (Fig. 1)
- 60: Gehäusebuchse (Fig. 1)
- 61: Buchsenboden von 60 (Fig. 1)
- 62: Loch in 61 für 42
- 63: Gegenflansch von 60 (Fig. 1, 3)
- 64: optische Achse von 20 (Fig. 1, 2)
- 65: kleiner Winkel zwischen 64, 14 (Fig. 1)
- 66: großer Winkel zwischen 64, 14 (Fig. 2)
- 67: Querdimension von 20 (Fig. 1)

## Patentansprüche

1. Vorrichtung zur Bilderfassung des Außenbereichs von einem Fahrzeug mittels einer Kamera (20),
die mit einer Bildwiedergabe im Innenbereich des Fahrzeugs verbindbar ist,
mit einem die Kamera (20) tragenden Schlitten (10),
der mittels eines Motors (30) mit nachgeschaltetem Getriebe (40) die Kamera (20) bezüglich einer Öffnung (51) in einer Fahrzeugwand (50) zwischen einer Einfahrlage (10.1) hinter (52) der Wand (50) und einer Ausfahrlage (10.2) vor (53) der Wand (50) verschiebt (12),
**dadurch gekennzeichnet,**
**dass** der Schlitten einen hülsenartigen Hohlraum (11) aufweist, der sich in Verschiebungsrichtung (12, 13) des Schlittens (10) erstreckt und eine Schubhülse (10) bildet,
**dass** die Kamera (20) im Hohlraum (11) der Schubhülse (10) auf einer Achse (21) schwenkbar (22) gelagert ist, die sich vorzugsweise quer zur Verschiebungsrichtung (11, 12) erstreckt,
und **dass** beim Verschieben (12, 13) der Schubhülse (10) die Kamera (20) zwischen zwei Stellungen (20.1, 20.2) verschwenkt (22) wird, nämlich
einerseits einer eingeschwenkten Ruhestellung (20.1), wo die Kamera (20) im Hülsen-Hohlraum (11) angeordnet ist und die Schubhülse (10) sich in ihrer Einfahrlage (10.1) befindet,
und andererseits einer herausgeschwenkten Arbeitsstellung (20.2), wo die Kamera (20) durch einen seitlichen Ausbruch (15) in der Hülsenwand (16) sperrig herausragt und die Schubhülse (10) ihre Ausfahrlage (10.2) einnimmt.

2. Vorrichtung nach Anspruch 1, **dadurch gekennzeichnet, dass** das Verschwenken (22) der Kamera (20) konform mit dem Verschieben (12, 13) der Schubhülse (10) erfolgt.

3. Vorrichtung nach Anspruch 1 oder 2, **dadurch gekennzeichnet, dass** die Kamera (20) in ihrer eingeschwenkten Ruhestellung (20.1) längsorientiert im Hülsen-Hohlraum (11) angeordnet ist.

4. Vorrichtung nach einem der Ansprüche 1 bis 3 mit einem vom Motor (30) mitbeweglichen Deckel (31), der in der Einfahrlage (10.1) die Öffnung (51) in der Fahrzeugwand (50) verschließt und in der Ausfahrlage (10.2) freigibt,
**dadurch gekennzeichnet,**
**dass** der Deckel (31) Bestandteil der Schubhülse (10) ist und bei deren Verschiebung (12, 13) eine lineare Hubbewegung (32) ausführt
und **dass** der Deckel (31) in der Einfahrlage (10.1) die Öffnung (51) in der Fahrzeugwand (50) abdichtend verschließt.

5. Vorrichtung nach einem der Ansprüche 1 bis 4, **dadurch gekennzeichnet, dass** der Deckel (31) ortsfest am äußeren Stirnende der Schubhülse (10) sitzt und einen äußeren Boden (17) vom Hülsen-Hohlraum (11) bildet.

6. Vorrichtung nach einem der Ansprüche 1 bis 5, **dadurch gekennzeichnet, dass** die Kamera (20) in einer Halterung (24) positioniert ist, welche die Schwenkachse (21) aufweist,
und dass die Schwenkachse (21) der Halterung (24) zur Schwenklagerung der Kamera (20) an der Hülseninnenwand (16) dient.

7. Vorrichtung nach einem der Ansprüche 1 bis 6, **dadurch gekennzeichnet, dass** der gleiche Motor (30) und das gleiche Getriebe (40) sowohl zum Verschieben (12, 13) der Schubhülse (10) als auch zum Verschwenken (22) der Kamera (20) dienen.

8. Vorrichtung nach Anspruch 7, **dadurch gekennzeichnet, dass** das Getriebe (40) selbsthemmend ist und die Kamera (20) in ihrer Arbeitsstellung (20.2), ihrer Ruhestellung (20.1) und/oder in jeder dazwischen liegenden Zwischenstellung sichert.

9. Vorrichtung nach einem der Ansprüche 1 bis 8, **dadurch gekennzeichnet, dass** die Antriebseinheit außer dem Motor (30) und dem Getriebe (40) mindestens noch eine auf die Schubhülse (10) einwirkende Federkraft (35) aufweist
und dass die Federkraft (35) bestrebt ist, die Schubhülse (10) in ihre Ausfahrlage (10.2) zu bewegen (12).

10. Vorrichtung nach einem der Ansprüche 1 bis 9, **dadurch gekennzeichnet, dass** das Getriebe (40) aus einer vom Motor (30) drehangetriebenen Kurbel (42) und einer Kurbel-Stange (44, 45) besteht,
dass die Stange (44, 45) einerends am Kurbelende (46) und anderends an einem Arm (27) der Kamerahalterung (24) angelenkt (47) ist.

11. Vorrichtung nach Anspruch 10, **dadurch gekennzeichnet, dass** die Kurbelstange aus zwei Abschnitten (44, 45) besteht, von denen der eine Stangenabschnitt (44) an der Kurbel (42) und der andere (45) am Arm (27) der Kamerahalterung (24) angebracht sind
und dass die beiden Stangenabschnitte (44, 45) miteinander kuppelbar (48) sind.

12. Vorrichtung nach Anspruch 10 oder 11, **dadurch gekennzeichnet, dass** die Kurbel (42) und die daran angelenkte Kurbelstange (44, 45) ein erstes Kniegelenk-Schenkelpaar bilden,
welches in der Ausfahrlage (10.2) im Wesentlichen gestreckt und in der Einfahrlage (10.1) geknickt ist.

13. Vorrichtung nach einem der Ansprüche 10 bis 12, **dadurch gekennzeichnet, dass** die Kurbelstange (44, 45) und der daran angelenkte Arm (27) der Kamerahalterung (24) ein zweites Kniegelenk-Schenkelpaar bilden,
welches in der Ausfahrlage (10.2) geknickt und in der Einfahrlage (10.1) im Wesentlichen gestreckt ist.

14. Vorrichtung nach einem der Ansprüche 1 bis 13, **dadurch gekennzeichnet, dass** die Schubhülse (10) in einer ruhenden Führungshülse (18) längsverschieblich aufgenommen ist,
dass die äußere Stirnöffnung (36) der Führungshülse (16) die Öffnung (51) in der Fahrzeugwand (50) einfasst
und dass beim Übergang von der Einfahrlage (10.1) in die Ausfahrlage (10.2) die Schubhülse (10) aus der Stirnöffnung (36) der Führungshülse (18) teleskopierbar ist.

15. Vorrichtung nach Anspruch 14, **dadurch gekennzeichnet, dass** die Führungshülse (18) wenigstens abschnittweise von einer Gehäusebuchse (60) umschlossen und geschützt ist
und dass der Buchsenboden (61) der Gehäusebuchse (60) ein Loch (62) zum Eindringen des Getriebes (40) in die Führungshülse (18) und bis zur Schubhülse (10) aufweist.

## Claims

1. Device for capturing the image of an external area of a vehicle by means of a camera (20),
which can be connected to an image reproduction in the internal area of the vehicle,
with a sliding carriage (10) carrying the camera (20),
with, by means of a motor (30) with an output gear unit (40), said sliding carriage (10) sliding (12) the camera (20), relative to an opening (51) in a vehicle wall (50), between a retracted position (10.1) behind (52) the wall (50) and an extended position (10.2) in front (53) of the wall (50),
**characterized in that**
the carriage has a sleeve-type cavity (11) which extends in the sliding direction (12, 13) of the sliding carriage (10) and forms a sliding sleeve (10),
the camera (20) is swivel mounted (22) on a pivot (21) in the cavity (11) of the sliding sleeve (10), which preferably extends transversely relative to the direction of sliding (11, 12),
when the sliding sleeve (10) is being slid (12, 13), the camera (20) is swiveled (22) between two position (20.1, 20.2), i.e. on one hand a swung-in at-rest position (20.1) at which the camera (20) is arranged in the sleeve cavity (11) and the sliding sleeve (10) is in its retracted position (10.1),
and on the other hand a swung-out working position (20.2) at which the camera (20) projects bodily through a side opening (15) in the sleeve wall (16) and the sliding sleeve (10) adopts its extended position (10.2).

2. Device according to Claim 1, **characterized in that** the swiveling (22) of the camera (20) takes place in conformity with the sliding (12, 13) of the sliding sleeve (10).

3. Device according to Claim 1 or 2, **characterized in that** the camera (20) is arranged lengthwise oriented in the sleeve cavity (11) in its swung-in at-rest position (20.1).

4. Device according to one of Claims 1 to 3, with a cover (31) which moves with the motor (30), with said cover (31) closing an opening (51) in the vehicle wall (50) in the retracted position (10.1) and exposing the opening in the extended position (10.2),
**characterized in that**
the cover (31) is part of the sliding sleeve (10) and performs a linear lifting movement (32) when the sliding sleeve (10) is being slid (12, 13)
and the cover (31) closes and seals the opening (51) in the vehicle wall (50) in the retracted position (10.1).

5. Device according to one of Claims 1 to 4,
**characterized in that** the cover (31) is permanently seated on the outer front face of the sliding sleeve (10) and forms an outer base (17) of the sleeve cavity (11).

6. Device according to one of Claims 1 to 5,
**characterized in that** the camera (20) is positioned in a holder (24) which contains the swivel axis (21),
and the swivel axis (21) of the holder (24) serves as a swivel mounting of the camera (20) on the sleeve inner wall (16).

7. Device according to one of Claims 1 to 6,
**characterized in that** the same motor (30) and the same gear unit (40) serve both to slide (12, 13) the sliding sleeve (10) and to swivel (22) the camera (20).

8. Device according to Claim 7, **characterized in that** the gear unit (40) is self locking and locks the camera (20) in its working position (20.2), in its at-rest position (20.1) and/or in any intermediate position.

9. Device according to one of Claims 1 to 8,
**characterized in that** in addition to the motor (30) and the gear unit (40) the drive unit also includes a spring force (35) which act on the sliding sleeve (10) and the spring force (35) is exerted (12) to move the sliding sleeve (10) to its extended position (10.2).

10. Device according to one of Claims 1 to 9,
**characterized in that** the gear unit (40) consist of a crank (42) rotated by the motor (30) and a crank rod (44, 45),
the rod (44, 45) is hinge-mounted (47) at one end on the end (46) of the crank and at the other end on an arm (27) of the camera holder (24).

11. Device according to Claim 10, **characterized in that** the crank rod consists of two sections (44, 45) of which one section, the rod section (44), is fitted to the crank (42) and the other end (45) is fitted to the arm (27) of the camera holder (24)
and both rod sections (44, 45) can be connected to each other (48).

12. Device according to Claim 10 or 11, **characterized in that** the crank (42) and the crank rod (44, 45) hinge-connected to it form a first pair of knuckle-joint pieces,
which in the extended position (10.2) is essentially extended and in the retracted position (10.1) is folded.

13. Device according to one of Claims 10 to 12,
**characterized in that** the crank rod (44, 45) and the arm (27) of the camera holder (24), hinge-connected to it, form a second pair of knuckle-joint pieces,
which is folded in the extended position (10.2) and essentially extended in the retracted position (10.1).

14. Device according to one of Claims 1 to 13, **characterized in that** the sliding sleeve (10) is accommodated in a stationery guide sleeve (18) so that it can slide lengthwise,
the outer front opening (36) of the guide sleeve (16) surrounds the opening (51) in the vehicle wall (50)
and **in that** the sliding sleeve (10) can be telescoped from the front opening (36) of the guide sleeve (18) during the transition from the retracted position (10.1) to the extended position (10.2).

15. Device according to Claim 14, **characterized in that** the guide sleeve (18) is surrounded and protected at least partially by a housing sleeve (60)
and the sleeve base (61) of the housing sleeve (60) has a hole (62) to enable entry of the gear unit (40) into the guide sleeve (18) and up to the sliding sleeve (10).

## Revendications

1. Dispositif de saisie d'images de la zone extérieure d'un véhicule au moyen d'une caméra (20),
susceptible d'être relié à une restitution d'image dans la zone intérieure du véhicule,
avec un chariot (10), qui porte la caméra (20), et qui
déplace (12), à l'aide d'un moteur (30) équipé d'une transmission (40) branchée en aval, la caméra (20) par rapport à une ouverture (51) ménagée dans une paroi de véhicule (50) entre une position rétractée (10.1) à l'arrière (52) de la paroi (50) et une position déployée (10.2) à l'avant (53) de la paroi (50),
**caractérisé en ce que**
le chariot présente un espace creux (11) du genre d'une douille, s'étendant dans la direction de déplacement (12, 13) du chariot (10) et formant une douille de poussée (10),
**en ce que** la caméra (20) est montée à pivotement (22) dans l'espace creux (11) de la douille de poussée (10), sur un axe (21) s'étendant de préférence transversalement à la direction de déplacement (11, 12),
et **en ce que**, lors du déplacement (12, 13) de la douille de poussée (10), la caméra (20) est pivotée (22) entre deux positions (20.1, 20.2), à savoir :
d'une part, une position de repos (20.1) rétractée par pivotement, dans laquelle la caméra (20) est disposée dans l'espace creux de douille (11) et la douille de poussée (10) se trouve dans sa position rétractée (10.1),
et, d'autre part, une position de travail (20.2) sortie par pivotement, dans laquelle la caméra (20) sort, de manière encombrante, par une ouverture (15) latérale ménagée dans la paroi de douille (16) et la douille de poussée (10) prend sa position déployée (10.2).

2. Dispositif selon la revendication 1, **caractérisé en ce que** le pivotement (22) de la caméra (20) s'effectue de manière conforme au déplacement (12, 13) de la douille de poussée (10).

3. Dispositif selon la revendication 1 ou 2, **caractérisé en ce que,** dans sa position de repos (20.1) rétractée par pivotement, la caméra (20) est disposée de manière orientée longitudinalement dans l'espace creux de douille (11).

4. Dispositif selon l'une des revendications 1 à 3, avec un couvercle (31) déplaçable conjointement sous l'effet de l'entraînement par le moteur (30), couvercle obturant, en position rétractée (10.1), l'ouverture (51) ménagée dans la paroi de véhicule (50) et la libérant, dans la position déployée (10.2),
**caractérisé en ce que**
le couvercle (31) fait partie de la douille de poussée (10) et effectue un déplacement de course (32) linéaire lors de son déplacement (12, 13)
et **en ce que** le couvercle (31), en position rétractée (10.1), obture de manière étanche l'ouverture (51) ménagée dans la paroi de véhicule (50).

5. Dispositif selon l'une des revendications 1 à 4, **caractérisé en ce que** le couvercle (31) est monté de manière localement fixe sur l'extrémité frontale extérieure de la douille de poussée (10) et forme un fond extérieur (17) de l'espace creux de douille (11).

6. Dispositif selon l'une des revendications 1 à 5, **caractérisé en ce que** la caméra (20) est positionnée dans une fixation (24) présentant l'axe de pivotement (21),
et **en ce que** l'axe de pivotement (21) de la fixation (24) sert au montage en palier de pivotement de la caméra (20) sur la paroi intérieure de douille (16).

7. Dispositif selon l'une des revendications 1 à 6,
**caractérisé en ce que** le même moteur (30) et la même transmission (40) servent tant au déplacement (12, 13) de la douille de poussée (10) qu'également au pivotement (22) de la caméra (20).

8. Dispositif selon la revendication 7, **caractérisé en ce que** la transmission (40) est auto-bloquante et assure la caméra (20) dans sa position de travail (20.2), sa position de repos (20.1) et/ou en toute position intermédiaire entre celles-ci.

9. Dispositif selon l'une des revendications 1 à 8,
**caractérisé en ce que,** outre le moteur (30) et la transmission (40), l'unité d'entraînement présente au moins aussi une force élastique (35) agissant sur la douille de poussée (10),
et **en ce que** la force élastique (53) vise à déplacer (12) la douille de poussée (10) à sa position déployée (10.2).

10. Dispositif selon l'une des revendications 1 à 9,
**caractérisé en ce que** la transmission (40) est composée d'une manivelle (42), entraînée en rotation par le moteur (30), et d'une bielle (44, 45), **en ce que** la bielle (44, 45) est articulée, à une extrémité, sur l'extrémité de manivelle (46) et, à l'autre extrémité, sur un bras (27) de la fixation de caméra (24).

11. Dispositif selon la revendication 10, **caractérisé en ce que** la bielle est composée de deux tronçons (44, 45), dont un tronçon de bielle (44) est monté sur la manivelle (42) et l'autre (45) sur le bras (27) de la fixation de caméra (24),
et **en ce que** les deux tronçons de bielle (44, 45) sont susceptibles d'être accouplés (48) ensemble.

12. Dispositif selon la revendication 10 ou 11, **caractérisé en ce que** la manivelle (42) et la bielle (44, 45) articulée sur elle forment une première paire de branches d'articulation à genouillère,
qui est sensiblement étirée dans la position déployée (10.2) et coudée dans la position rétractée (10.1).

13. Dispositif selon l'une des revendications 10 à 12, **caractérisé en ce que** la bielle (44, 45) et le bras (27) articulé sur elle, de la fixation de caméra (24), forment une deuxième paire de branches d'articulation à genouillère,
qui est coudée dans la position déployée (10.2) et sensiblement étirée dans la position rétractée (10.1).

14. Dispositif selon l'une des revendications 1 à 13, **caractérisé en ce que** la douille de poussée (10) est logée de manière déplaçable longitudinalement dans une douille de guidage (18) stationnaire,
**en ce que** l'ouverture frontale extérieure (36) de la douille de guidage (16) entoure l'ouverture (51) ménagée dans la paroi de véhicule (50),
et **en ce que**, lors du passage de la position rétractée (10.1) à la position déployée (10.2), la douille de poussée (10) est susceptible d'effectuer une manoeuvre télescopique hors de l'ouverture frontale (36) de la douille de guidage (18).

15. Dispositif selon la revendication 14, **caractérisé en ce que** la douille de guidage (18) est entourée au moins par tronçons et protégée par une douille de boîtier (60),
et **en ce que** le fond de boîtier (61) de la douille de boîtier (60) présente un trou (62), pour la pénétration de la transmission (40) dans la douille de guidage (18) et jusqu'à la douille de poussée (10).
